# FASCICULE DE BREVET EUROPEEN

(11) **EP 3 148 769 B1**
(45) Date de publication et mention de la délivrance du brevet: **21.10.2020**
(21) Numéro de dépôt: 15726065.4
(22) Date de dépôt: 22.05.2015
(51) Int. Cl.: B29C 45/56

(54) **PROCÉDÉ POUR LA FABRICATION D'UN RÉCEPTACLE ET DISPOSITIF DE FABRICATION DU RÉCEPTACLE**
VERFAHREN ZUR HERSTELLUNG EINES BEHÄLTERS UND VORRICHTUNG ZUR HERSTELLUNG DES BEHÄLTERS
METHOD FOR PRODUCING A RECEPTACLE AND DEVICE FOR PRODUCING THE RECEPTACLE

(30) Priorité: 28.05.2014 FR 1454820
(43) Date de publication de la demande: 05.04.2017
(73) Titulaire: Albéa Services, 92230 Gennevilliers (FR)
(72) Inventeur: RAMOS, Victor, F-78120 Rambouillet (FR)
(74) Mandataire: Gevers & Orès
(86) Numéro de dépôt international: PCT/EP2015/061357
(87) Numéro de publication internationale: WO 2015/181062

(56) Documents cités:
- EP-A1- 1 208 955
- EP-A1- 2 040 044
- EP-A1- 2 623 292
- DE-A1- 19 622 093
- FR-A1- 2 503 625
- JP-A- S55 140 539

## Description

L'invention concerne un procédé pour la fabrication d'un réceptacle, notamment un pot, en particulier un pot pour produit cosmétique, un réceptacle obtenu selon ledit procédé et un dispositif de fabrication du réceptacle.

Il est connu des pots pour produits cosmétiques obtenus en matière plastique. Ces pots comprennent une paroi latérale circulaire et un fond. Les fonds peuvent être très épais, par exemple de l'ordre de 10 mm, notamment par rapport à la paroi latérale. Or, l'épaisseur qu'une buse d'injection est capable de produire tout en minimisant les effets de sillons autour du point d'injection est directement liée au diamètre de l'ouverture de la buse par laquelle la matière entre dans le moule. Ainsi, pour de fortes épaisseurs de paroi, une buse d'injection standard dont le diamètre d'ouverture est faible, notamment pour minimiser l'aspect du point d'injection sur le pot, permet seulement d'obtenir un pot présentant d'importants sillons de remplissage autour du point d'injection. De tels sillons seront jugés par les professionnels du domaine comme inesthétique.

Une solution connue pour éviter cet inconvénient est de multiplier le nombre de buses utilisées pour réaliser le pot en effectuant des injections successives. Une telle solution permet en effet de réduire le volume à remplir de matière par buse d'injection. Une autre solution connue consiste à réaliser l'injection en deux étapes, c'est-à-dire en effectuant une première injection afin de créer une première forme du réceptacle puis une deuxième injection, surmoulée autour de la première injection. Cependant ces deux solutions nécessitent l'utilisation d'un dispositif couteux présentant plusieurs buses ou configuré pour effectuer du surmoulage. En outre, ces solutions laissent des traces visibles sur le pot à l'endroit où le matériau provenant des différentes buses se rejoint ou à l'endroit où le matériau est surmoulé autour de la première forme créée. EP2623292 divulgue un appareil de moulage par injection et un procédé de moulage par injection, qui peuvent former de manière satisfaisante une préforme ayant un fond plus épais qu'un corps. L'appareil de moule comprend un moule à col, un moule à cavité d'injection et un moule à noyau d'injection ayant un moule à noyau intérieur et un moule à noyau extérieur, et comprend en outre un moyen de régulation, tel qu'un élément de poussée, pour réguler le mouvement du noyau intérieur du moule vers l'extérieur du moule à cavité d'injection.

L'invention vise à améliorer la situation. Elle concerne à cet effet un procédé de fabrication d'un réceptacle, en particulier un réceptacle pour produit cosmétique, procédé dans lequel on injecte un matériau dans une cavité de moulage selon une étape dite d'injection, caractérisé par le fait que l'on agrandit la cavité de moulage au cours de l'injection de manière à augmenter l'épaisseur d'une paroi du réceptacle selon une étape dite d'éloignement, dans lequel on injecte ledit matériau en vis-à-vis d'un noyau à l'aide d'une station d'injection et on éloigne le noyau de la station d'injection par l'intermédiaire d'un mécanisme d'entraînement comprenant un engrenage lors de ladite étape d'éloignement de manière à augmenter l'épaisseur de la paroi du réceptacle se trouvant entre le noyau et la station d'injection, ledit engrenage comprenant une roue dentée en liaison hélicoïdale avec le noyau.

L'ajustement de la taille de la cavité de moulage permet de réduire le volume initial que la buse doit remplir puis de l'augmenter progressivement en suivant le rythme de remplissage pour obtenir l'épaisseur souhaité. L'invention propose de la sorte un procédé permettant d'utiliser une seule buse d'injection, présentant une ouverture d'injection dont le diamètre est inférieur à l'épaisseur de ladite paroi, sans obtenir les effets de vagues, ni les traces rencontrées avec les solutions de l'état de l'art.

Selon différents modes de réalisation de l'invention, qui pourront être pris ensemble ou séparément :
- ledit réceptacle est injecté en une seule opération d'injection, en une unique couche de matière ;
- ledit matériau est injecté par ladite station d'injection par l'intermédiaire d'une unique buse d'injection ;
- l'étape d'injection commence avant l'étape d'éloignement ;
- l'étape d'éloignement comprend une étape de déplacement du noyau entre une première position définissant une première épaisseur de matière de la paroi du réceptacle et une deuxième position du noyau, l'étape d'éloignement commençant au moment où l'étape d'injection a formé ladite première épaisseur de matière ;
- la première position du noyau définit une épaisseur de la paroi entre 2 et 5 mm et la deuxième position du noyau définit une épaisseur de la paroi entre 9 et 12 mm ;
- le matériau d'injection fait partie de la famille des copolyesters.

Avantageusement, l'invention concerne encore un dispositif de fabrication d'un réceptacle, en particulier un réceptacle pour produit cosmétique, ledit dispositif comprenant une cavité de moulage et des moyens d'injection d'un matériau dans ladite cavité de moulage, ledit dispositif étant configuré pour agrandir la cavité de moulage au cours de l'injection de manière à augmenter l'épaisseur d'une paroi du réceptacle, dans lequel
- lesdits moyens d'injections comprennent une station d'injection,
- ladite cavité de moulage comprend un noyau agencé pour se déplacer par rapport à ladite station d'injection,
- ledit dispositif comprend en outre un mécanisme d'entrainement dudit noyau qui, configuré pour déplacer ledit noyau par rapport à ladite station d'injection, comprend un engrenage comprenant une roue dentée en liaison hélicoïdale avec le noyau.

Selon différents modes de réalisation de l'invention, qui pourront être pris ensemble ou séparément :
- l'engrenage comprend un satellite, une roue dentée agencée pour que le satellite entraine en rotation la roue dentée ;
- la roue dentée est en liaison hélicoïdale avec ledit noyau par l'intermédiaire d'une pièce intermédiaire ;
- la pièce intermédiaire est montée de manière amovible sur ledit noyau ;
- la station d'injection comprend une buse d'injection comportant une ouverture d'injection de diamètre compris entre 2 et 5mm.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 est une vue schématique en coupe axiale d'un exemple de réalisation de réceptacle conforme à l'invention ;
- la figure 2 est une vue en coupe axiale d'un dispositif d'injection conforme à l'invention ;
- la figure 3a est une vue schématique en coupe axiale d'une partie du dispositif d'injection selon l'invention représenté à une première étape de l'injection ;
- la figure 3b est une vue similaire à la figure 1a représentant le dispositif d'injection selon l'invention à une deuxième étape de l'injection.

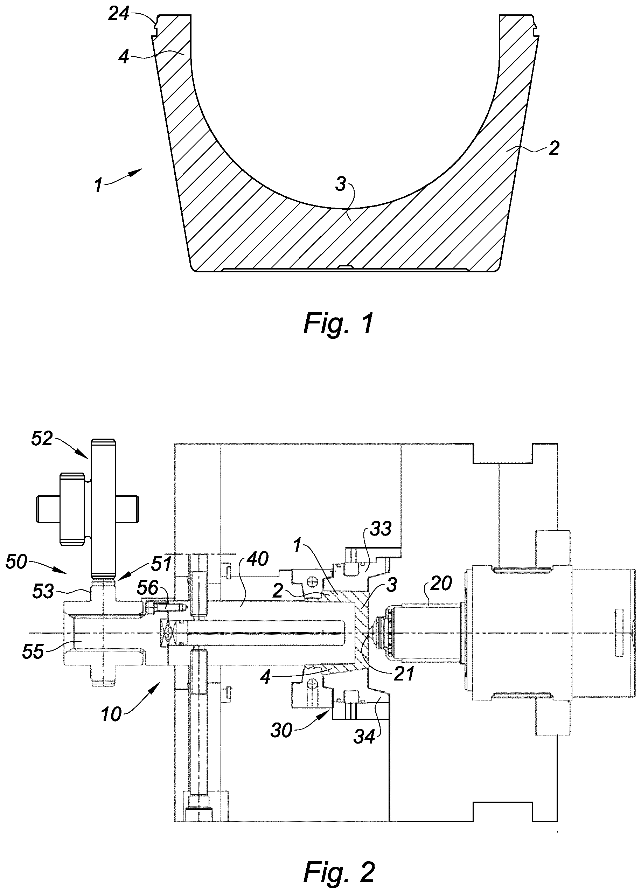

Comme illustré à la figure 1, l'invention concerne un réceptacle 1, en particulier un pot pour produit cosmétique tel que de la crème. Le réceptacle 1 de l'invention est en particulier rigide. Nous entendons par « rigide » un réceptacle qui ne peut pas être déformé, tout du moins sans casser, à l'opposé d'un réceptacle relativement souple tel que les tubes utilisés dans le domaine de la cosmétique.

Le réceptacle 1 comprend ici une paroi latérale 2 et une paroi de fond, dit fond 3. La paroi latérale 2 et le fond 3 forment un corps 4 formé d'une unique couche de matière, notamment de la famille des copolyesters. La paroi latérale 2 comprend ici un goulot 24 présentant des formes techniques lui permettant de coopérer avec, par exemple, un couvercle (non représenté).

Le réceptacle 1 est représenté sur la figure 2 en cours de réalisation dans un dispositif d'injection 10 selon l'invention.

Le dispositif d'injection 10 comprend un moule 30 muni d'une station d'injection 20 et un noyau 40. Le moule 30 définit une cavité de moulage du réceptacle 1, en particulier située entre le noyau 40 et ladite station d'injection 20. L'injection de matière à l'intérieur du moule pour fabriquer le réceptacle 1 se fait ici via une buse d'injection 21 de la station d'injection 20. La matière est par exemple injectée autour du noyau 40. L'injection a lieu ici entre au moins deux coquilles 33, 34 du moule 30 qui est bien sûr fermé au moment de l'injection. Le réceptacle 1 est injecté en une seule opération d'injection et donc en une unique couche de matière.

Cela étant, selon l'invention, on agrandit la cavité de moulage au cours de l'injection de manière à augmenter l'épaisseur d'au moins une des parois 3 du réceptacle 1, ici le fond 3, selon une étape dite d'éloignement. Le réceptacle de l'invention n'est donc pas fabriqué par surmoulage. Il en résulte qu'il n'y a pas de trace visible de mélange du matériau puisqu'il n'y a pas de zone de recoupement du surmoulage.

La station d'injection 20 comprend avantageusement une seule buse d'injection 21. Ainsi, le matériau est injecté par la station d'injection 20 par l'intermédiaire d'une unique ouverture d'injection. Autrement dit, le réceptacle de l'invention n'est pas fabriqué par bi-injection. Il en résulte qu'il n'y a pas de trace visible de mélange du matériau puisqu'il n'y a pas de zone dans laquelle les matériaux qui proviendraient de plusieurs buses se rejoignent.

Le dispositif d'injection 10 pourra comprendre un mécanisme d'entrainement 50 du noyau 40 configuré pour déplacer le noyau 40 par rapport à la station d'injection 20. Le noyau 40 peut ainsi être déplacé pendant l'injection de matière.

Le procédé de fabrication du réceptacle 1 selon l'invention prévoit en effet avantageusement une étape d'injection pendant laquelle on injecte le matériau autour du noyau 40 à l'aide de la station d'injection 20, l'étape d'éloignement servant alors à éloigner le noyau 40 de la station d'injection 10 par l'intermédiaire du mécanisme d'entrainement 50 de manière à augmenter l'épaisseur du fond 3. Une partie de l'étape d'injection et le déplacement du noyau 40 se font par exemple de manière simultanée. A la suite de l'étape d'éloignement, et d'une éventuelle étape de refroidissement, le moule est ouvert et le réceptacle 1 est récupéré.

Le dispositif d'injection 10 permet de mettre en œuvre le procédé de fabrication du réceptacle 1 de l'invention.

Ainsi, grâce à l'invention, le noyau 40 peut se déplacer pendant l'injection de matière dans le moule de manière à augmenter, notamment de manière régulière, l'épaisseur du fond 3 du réceptacle 1, de manière à éviter les problèmes engendrés par une injection dans un volume trop grand par rapport au diamètre de l'ouverture de la buse d'injection 21, comme expliqué précédemment.

Le mécanisme d'entrainement 50 comprend ici un engrenage 51. L'engrenage 51 est particulièrement avantageux, car il permet de contrôler précisément la position du noyau 40 par rapport à la station d'injection 20 tout en résistant bien à la pression exercé sur le noyau 40 par l'injection du matériau dans le moule. L'engrenage 51 permet en outre d'obtenir un déplacement régulier du noyau 40, c'est-à-dire un déplacement constant et/ou sans à-coup. L'engrenage 51 présente également l'avantage d'être peu couteux. Il pourra bien sur s'agir d'autres mécanismes d'entrainement, tel que des mécanismes à came.

L'engrenage 51 comprend par exemple un satellite 52 permettant notamment de démultiplier le couple d'un moteur d'entrainement de l'engrenage non représenté. L'engrenage 51 comprend ici une roue dentée 53 qui engraine avec le satellite 52. La rotation du satellite 52 permet ainsi d'entrainer en rotation la roue dentée 53.

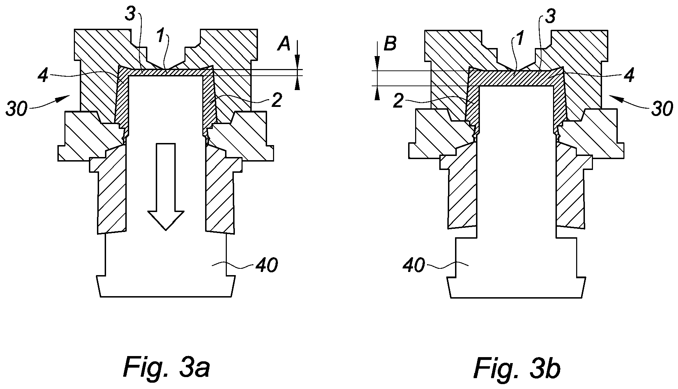

Dans le but de déplacer le noyau 40 par rapport à la station d'injection 20, la roue dentée 53 est ici en liaison hélicoïdale avec le noyau 40. Ainsi, suite à la rotation du satellite 52 puis de la roue dentée 53, le noyau 40 va se déplacer en translation par rapport à la station d'injection 20. Le noyau 40 s'éloigne ainsi de la station d'injection 20 lors de l'injection de la matière dans le moule ou se rapproche de la station d'injection 20 pour préparer le dispositif d'injection 10 à une nouvelle injection. Le noyau 40 va notamment se déplacer entre une première position illustrée à la figure 3a et une deuxième position illustrée à la figure 3b.

La roue dentée 53 est ici en liaison hélicoïdale avec le noyau 40 par l'intermédiaire d'une pièce intermédiaire 55. Cette pièce intermédiaire 55 est notamment insérée dans la roue dentée 53. Elle comprend par exemple un filetage, en liaison avec un taraudage de la roue dentée 53 ou inversement. La pièce intermédiaire 55 est montée avantageusement de manière amovible sur le noyau 40. Elle est ici montée amovible par rapport au noyau par l'intermédiaire d'une vis 56. Ainsi il est possible de réaliser différents réceptacles 1 en changeant uniquement le noyau 40 du dispositif d'injection 10 et en positionnant le nouveau noyau sur la pièce intermédiaire 55.

L'étape d'éloignement déplace le noyau 40 entre une première position représentée à la figure 3a et définissant une première épaisseur de matière de la paroi du réceptacle et une deuxième position du noyau 40 représentée à la figure 3b. Selon l'invention, l'étape d'éloignement commence après le début de l'étape d'injection. On entend ici que l'étape d'éloignement ne commence pas tant que l'étape d'injection n'a pas commencé. Avantageusement, l'étape d'éloignement commence au moment où l'étape d'injection a formé la première épaisseur de matière du fond.

Autrement dit, l'étape d'injection commence alors que le noyau 40 est dans sa première position. Le noyau 40 reste dans sa première position tant que la première épaisseur n'a pas été remplie de matériau, c'est-à-dire jusqu'au moment illustré à la figure 3a. A ce moment, c'est-à-dire lorsque le moule est rempli de matière, l'étape d'éloignement commence, c'est-à-dire que le mécanisme d'entrainement commence à entrainer le noyau 40 de sa première à sa deuxième position illustrée à la figure 3b, c'est-à-dire jusqu'à obtenir l'épaisseur du fond 3 souhaitée.

La première position du noyau 40 définit par exemple une épaisseur A du fond entre 2 et 5 mm et la deuxième position du noyau définit une épaisseur B du fond entre 9 et 12 mm.

Grâce à l'invention, la buse 21 de la station d'injection 20 peut comprendre une ouverture d'injection dont le diamètre est standard, notamment compris entre 2 et 5mm, sans engendrer les phénomènes de sillons autour du point d'injection.

L'invention permet en outre d'utiliser des matériaux, notamment de la famille des copolyesters, qui peuvent être injectés sur une épaisseur équivalente au diamètre d'ouverture de la buse d'injection, sans créer les défauts évoqués précédemment comme par exemple les vaguelettes autour du point d'injection.

Ainsi, la station d'injection 20 va injecter du matériau dans le moule jusqu'à créer une première épaisseur du fond 3 du réceptacle 1 de l'ordre de 2 à 5 mm, puis le mécanisme d'entrainement va entrainer le noyau 40 jusqu'à atteindre l'épaisseur désirée, notamment 9 à 12 mm, sans créer de vaguelettes autour du point d'injection.

Selon l'invention, plusieurs dispositifs d'injection 10 de l'invention peuvent être disposés en série et/ou en parallèle de manière à augmenter la fréquence de production. Les dispositifs d'injection 10 seront par exemple disposés les uns à côté des autres et/ou de manière symétrique, par exemple avec les stations d'injection 20 situées à l'opposée l'une de l'autre et les mécanismes d'entrainement 50 situés dos à dos.

## Revendications

1. Procédé de fabrication d'un réceptacle (1), en particulier un réceptacle pour produit cosmétique, procédé dans lequel on injecte un matériau dans une cavité de moulage selon une étape dite d'injection, on agrandit la cavité de moulage au cours de l'injection de manière à augmenter l'épaisseur d'une paroi (3) du réceptacle (1) selon une étape dite d'éloignement, dans lequel on injecte ledit matériau en vis-à-vis d'un noyau (40) à l'aide d'une station d'injection (20) et on éloigne le noyau (40) de la station d'injection (20) par l'intermédiaire d'un mécanisme d'entraînement (50) comprenant un engrenage (51) lors de ladite étape d'éloignement de manière à augmenter l'épaisseur de la paroi du réceptacle se trouvant entre le noyau (40) et la station d'injection (20), ledit engrenage (51) comprenant une roue dentée (53) en liaison hélicoïdale avec le noyau (40).

2. Procédé de fabrication selon la revendication 1, dans lequel ledit réceptacle (1) est injecté en une seule opération d'injection, en une unique couche de matière.

3. Procédé de fabrication selon l'une quelconque des revendications précédentes, dans lequel l'étape d'injection commence avant l'étape d'éloignement.

4. Procédé de fabrication selon l'une quelconque des revendications précédentes, dans lequel ledit matériau est injecté par ladite station d'injection (20) par l'intermédiaire d'une unique buse d'injection (21).

5. Procédé de fabrication selon l'une quelconque des revendications précédentes, dans lequel l'étape d'éloignement comprend une étape de déplacement du noyau (40) entre une première position définissant une première épaisseur de matière de la paroi du réceptacle et une deuxième position du noyau (40), l'étape d'éloignement commençant au moment où l'étape d'injection a formé ladite première épaisseur de matière.

6. Procédé de fabrication selon la revendication 5, dans lequel la première position du noyau (40) définit une épaisseur de la paroi entre 2 et 5 mm et la deuxième position du noyau définit une épaisseur de la paroi (3) entre 9 et 12 mm.

7. Procédé de fabrication selon la revendication précédente, dans lequel le matériau d'injection fait parti de la famille des copolyesters.

8. Dispositif (10) de fabrication d'un réceptacle (1), en particulier un réceptacle pour produit cosmétique, dispositif (10) comprenant une cavité de moulage et des moyens d'injection d'un matériau dans ladite cavité de moulage, ledit dispositif (10) étant configuré pour agrandir la cavité de moulage au cours de l'injection de manière à augmenter l'épaisseur d'une paroi (3) du réceptacle (1), dans lequel
• lesdits moyens d'injections comprennent une station d'injection (20),
• ladite cavité de moulage comprend un noyau (40) agencé pour se déplacer par rapport à ladite station d'injection (20),
• ledit dispositif comprend en outre un mécanisme d'entrainement (50) dudit noyau (40) qui, configuré pour déplacer ledit noyau (40) par rapport à ladite station d'injection (20), comprend un engrenage (51) comprenant une roue dentée (53) en liaison hélicoïdale avec le noyau (40).

9. Dispositif (10) selon la revendication 8, dans lequel l'engrenage (51) comprend un satellite (52), une roue dentée (53) agencée pour que le satellite (52) entraine en rotation la roue dentée (53).

10. Dispositif (10) selon la revendication 9, dans lequel la roue dentée (53) est en liaison hélicoïdale avec ledit noyau (40) par l'intermédiaire d'une pièce intermédiaire (55) montée de manière amovible sur ledit noyau (40).

11. Dispositif (10) selon l'une quelconque des revendications 8 à 10 dans lequel la station d'injection (20) comprend une buse d'injection comportant une ouverture d'injection de diamètre compris entre 2 et 5mm.

## Patentansprüche

1. Verfahren zur Herstellung eines Behälters (1), insbesondere eines Behälters für ein Kosmetikprodukt, wobei während eines sogenannten Einspritzschrittes ein Material in einen Formhohlraum eingespritzt wird, der Formhohlraum im Verlauf des Einspritzens vergrößert wird, um so die Dicke einer Wand (3) des Behälters (1) während eines sogenannten Entfernungsschrittes zu erhöhen, bei dem das Material gegenüber einem Kern (40) mithilfe einer Einspritzstation (20) eingespritzt wird und der Kern (40) über einen Antriebsmechanismus (50), der ein Getriebe (51) umfasst, während des Entfernungsschrittes von der Einspritzstation (20) entfernt wird, um so die Dicke der Behälterwand, die sich zwischen dem Kern (40) und der Einspritzstation (20) befindet, zu erhöhen, wobei das Getriebe (51) ein Zahnrad (53) umfasst, das schraubenförmig mit dem Kern (40) in Verbindung steht.

2. Verfahren zur Herstellung nach Anspruch 1, wobei der Behälter (1) in einem einmaligen Einspritzvorgang und mit einer einzelnen Materialschicht eingespritzt wird.

3. Verfahren zur Herstellung nach einem der vorstehenden Ansprüche, wobei der Einspritzschritt vor dem Entfernungsschritt beginnt.

4. Verfahren zur Herstellung nach einem der vorstehenden Ansprüche, wobei das Material von der Einspritzstation (20) über eine einzelne Einspritzdüse (21) eingespritzt wird.

5. Verfahren zur Herstellung nach einem der vorstehenden Ansprüche, wobei der Entfernungsschritt einen Verschiebeschritt des Kerns (40) zwischen einer ersten Position, die eine erste Materialdicke der Wand des Behälters festlegt, und einer zweiten Position des Kerns (40) umfasst, wobei der Entfernungsschritt in dem Augenblick beginnt, in dem der Einspritzschritt die erste Materialdicke gebildet hat.

6. Verfahren zur Herstellung nach Anspruch 5, wobei die erste Position des Kerns (40) eine Wanddicke zwischen 2 und 5 mm festlegt und die zweite Position des Kerns einen Wanddicke (3) zwischen 9 und 12 mm festlegt.

7. Verfahren zur Herstellung nach einem der vorstehenden Ansprüche, wobei das Einspritzmaterial aus der Copolyester-Familie stammt.

8. Vorrichtung (10) zur Herstellung eines Behälters (1), insbesondere eines Behälters für ein Kosmetikprodukt, wobei die Vorrichtung (10) einen Formhohlraum und Mittel zum Einspritzen eines Materials in den Formhohlraum umfasst, wobei die Vorrichtung (10) ausgelegt ist, um den Formhohlraum im Verlauf des Einspritzens zu vergrößern, um so die Dicke einer Wand (3) des Behälters (1) zu erhöhen, wobei
• die Einspritzmittel eine Einspritzstation (20) umfassen,
• der Formhohlraum einen Kern (40) umfasst, der angeordnet ist, um sich in Bezug auf die Einspritzstation (20) zu verschieben,
• die Vorrichtung weiter einen Antriebsmechanismus (50) des Kerns (40) umfasst, der dafür ausgelegt ist, den Kern (40) in Bezug auf die Einspritzstation (20) zu verschieben, und ein Getriebe (51) umfasst, das ein Zahnrad (53) umfasst, das schraubenförmig mit dem Kern (40) in Verbindung steht.

9. Vorrichtung (10) nach Anspruch 8, wobei das Getriebe (51) einen Satelliten (52), ein Zahnrad (53) umfasst, das so angeordnet ist, dass der Satellit (52) das Zahnrad (53) in Drehung versetzt.

10. Vorrichtung (10) nach Anspruch 9, wobei das Zahnrad (53) über ein Zwischenstück (55), das abnehmbar auf dem Kern (40) montiert ist, in schraubenförmiger Verbindung zum Kern (40) steht.

11. Vorrichtung (10) nach einem der Ansprüche 8 bis 10, wobei die Einspritzstation (20) eine Einspritzdüse umfasst, die eine Einspritzöffnung mit einem Durchmesser zwischen 2 und 5 mm umfasst.

## Claims

1. Method for producing a receptacle (1), in particular a receptacle for a cosmetic product, method wherein a material is injected into a moulding cavity in a so-called injection step, the moulding cavity is expanded during the injection so as to increase the thickness of a wall (3) of the receptacle (1) in a so-called separation step, wherein said material is injected facing a core (40) using an injection station (20) and the core (40) is separated from the injection station (20) by way of a drive mechanism (50) comprising a gearing (51) during said separation step so as to increase the thickness of the receptacle located between the core (40) and the injection station (20), said gearing (51) comprising a gearwheel (53) helicoidally connected to the core (40).

2. Production method according to claim 1, wherein said receptacle (1) is injected in a single injection operation, into a single material layer.

3. Production method according to any one of the preceding claims, wherein the injection step starts before the separation step.

4. Production method according to any one of the preceding claims, wherein said material is injected by said injection station (20) by way of a single injection nozzle (21).

5. Production method according to any one of the preceding claims, wherein the separation step comprises a step of moving the core (40) between a first position defining a first thickness of material of the wall of the receptacle and a second position of the core (40), the separation step starting at the time where the injection step has formed said first thickness of material.

6. Production method according to claim 5, wherein the first position of the core (40) defines a thickness of the wall between 2 and 5mm and the second position of the core defines a thickness of the wall (3) between 9 and 12mm.

7. Production method according to the preceding claim, wherein the injection material forms part of the copolyester family.

8. Device (10) for producing a receptacle (1), in particular a receptacle for a cosmetic product, device (10) comprising a moulding cavity and means for injecting a material in said moulding cavity, said device (10) being configured to expand the moulding cavity during injection in such a way as to increase the thickness of a wall (3) of the receptacle (1), wherein
• said injection means comprise an injection station (20),
• said moulding cavity comprises a core (40) arranged to be moved with respect to said injection station (20),
• said device further comprises a mechanism for driving (50) said core (40) which, configured to move said core (40) with respect to said injection station (20), comprises a gearing (51) comprising a gearwheel (53) in helicoidal connection with the core (40).

9. Device (10) according to claim 8, wherein the gearing (51) comprises a satellite (52), a gearwheel (53) arranged such that the satellite (52) rotates the gearwheel (53).

10. Device (10) according to claim 9, wherein the gearwheel (53) is in helicoidal connection with said core (40) by way of an intermediate part (55) mounted removably on said core (40).

11. Device (10) according to any one of claims 8 to 10, wherein the injection station (20) comprises an injection base comprising an injection opening of diameter between 2 and 5mm.
